# EUROPÄISCHE PATENTANMELDUNG

(11) **EP 2 517 987 A1**
(43) Veröffentlichungstag der Anmeldung: **31.10.2012**
(21) Anmeldenummer: 11164321.9
(22) Anmeldetag: 29.04.2011
(51) Int. Cl.: B65G 15/62

(54) **Förderbandeinrichtung**

(71) Anmelder: Mettler-Toledo Garvens GmbH, 31180 Giesen (DE)
(72) Erfinder: Rüdiger ,Kliefoth (Hr.), 30925 Ronnenberg (DE)
(74) Vertreter: Mettler-Toledo

(57) **Zusammenfassung**

Eine Förderbandeinrichtung (1) weist einen Bandkörper (6) auf, an welchem an den in Förderrichtung (T) und entgegen der Förderrichtung (T) sich befindenden Enden jeweils eine Förderrolle (13, 14) angeordnet ist, und ein über den Bandkörper (6) und die Förderrollen (13, 14) beweglich angeordnetes Förderband (5). Das Förderband (5) ist derart ausgerichtet und über den Bandkörper (6) und über die Förderrollen (13, 14) gespannt , dass zwischen den Aussenkanten (7) des Förderbandes (5) und dem Bandkörper (6) eine Dichtwirkung erzielt wird, wobei die Aussenkanten (7) des Förderbandes (5) mindestens einen einem maximalen Schwankungshub einer lateralen Förderbandschwankung entsprechenden Abstand (d) jeweils von den Kanten (17) des Bandkörpers (6) entfernt sind.

## Beschreibung

Die vorliegende Erfindung betrifft eine Fördereinrichtung, insbesondere eine Förderbandeinrichtung, mit einem Bandkörper, an welchem an den in Förderrichtung und entgegen der Förderrichtung sich befindenden Enden jeweils mindestens eine Förderrolle angeordnet ist und die Förderbandeinrichtung mit einem über den Bandkörper und die Rollen beweglich angeordneten Förderband versehen ist.

Solche Einrichtungen zum Fördern von Waren oder Produkten kommen bevorzugt dann zum Einsatz, wenn es gilt, Waren einer Einrichtung zur deren Inspektion zuzuführen. Dabei kann es sich um eine Wägeeinrichtung zum dynamischen Verwiegen der jeweiligen Ware handeln oder um eine Einrichtung zum Erkennen von Metallverunreinigungen in den Produkten oder eine Röntgeneinrichtung zum Erkennen verschiedener Verunreinigungen innerhalb der Produkte und dergleichen mehr. Bei den Produkten handelt es sich dabei bevorzugt um verpackte Waren aus der Lebensmittel- oder Pharmaindustrie, vorzugsweise um verpackte pulverförmige oder feinkörnige Güter.

Bei einem genannten Förderband kann es sich zum Beispiel um ein Zufuhrband, ein Abführband oder um ein über eine dynamische Wägereinrichtung bewegtes Wägeförderband handeln; auch sind Förderbänder, die die Produkte einer Inspektionseinrichtung für die Erkennung von Verunreinigungen zuführen, hier in die Betrachtung mit einzubeziehen. Häufig ist ein Förderband als sogenanntes Endlosband, das heisst ein in sich geschlossenes Band, ausgestaltet, das über mindestens zwei Förderrollen geführt ist, namentlich eine passive Laufrolle und eine Antriebsrolle, die mit einem Antrieb verbunden ist zum aktiven Antrieb des Förderbandes.

Als Beispiel für zu fördernde Waren oder zu fördernde Produkte seien hier Packungen mit einem pulverförmigen oder körnigen Inhalt, insbesondere Zucker, angeführt. Der Zucker ist in den für den Verkauf im Einzelhandel bestimmten Gebinden mit einem vordefinierten Gewichtswert - beispielsweise 1 Kilogramm - vorzugsweise in Papierverpackungen abgepackt. Diese Papierverpackungen sind in der Regel gefaltete und an den Verschlussstellen verklebte Tüten, die den Inhalt als Paket fest umschliessen. Erfahrungsgemäss sind diese Papierverpackungen nicht vollständig dicht und im Verlauf des Transports ist damit zu rechnen, dass immer wieder gewisse kleinere Mengen an Zuckerkörnern aus den Papierverpackungen rieseln können und auf dem jeweiligen Transportmittel zu liegen kommen. Diese lose auf einem Förderband liegenden Zuckerkörner können jedoch enormen Schaden anrichten, wenn sie in die beweglichen Teile der entsprechenden Förderbandeinrichtung gelangen.

Das Problem des sich auf dem Förderband befindlichen Pulvers oder feinkörnigen Materials besteht darin, dass diese Materialien durch die schnelle Bewegung des Förderbandes leicht verteilt werden und somit auch unter das Förderband geraten können - zum Beispiel auf die Innenseite eines obengenannten Endlosbandes -, sich dort aufreiben und letztendlich in die Lager der an den jeweiligen Enden befindlichen Förderrollen gelangen können. Dort können sie durch Erhitzen, Verdichten und Verkleben etc. hohen Schaden anrichten, der zu einem häufigen Auswechseln der jeweiligen Bauelemente der Förderbandeinrichtung führt.

Durch die offene Bauform der bekannten Förderbandeinrichtungen besteht ausserdem die Gefahr dass das Fördergut in die Antriebseinrichtung gelangen kann. Diese Gefahr besteht vor allem dann, wenn es sich um einen Riemenantrieb handelt, der in der Regel einen über zwei Scheiben geführten Riemen, sei dies ein Zahnriemen, ein Keilriemen oder dergleichen, aufweist. Das Pulver oder feinkörnige Material kann vom Riemen auf die Scheiben transportiert werden, sich dort verdichten und ablagern. Dies führt zu einem Materialaufbau am Umfang der Scheibe und dadurch zu einer höheren Spannung und entsprechenden Dehnung des Riemens, und letztendlich zu dessen Reissen. Der Ausfall eines Riemens, beziehungsweise die benötigte Zeit für dessen Ersetzen, bedeutet dann auch entsprechende Ausfallzeiten für die jeweiligen Anlagen.

Im Stand der Technik wird diesem Problem häufig damit begegnet, dass die Gebinde anstatt auf einem Förderbande auf Förderriemen transportiert werden, wobei unterhalb der Förderriemen eine Auffangwanne angeordnet ist, in welcher das aus den Gebinden rieselnde Material aufgefangen wird. Damit ist jedoch nicht gewährleistet, dass die sich weitestgehend offen präsentierenden Lager nicht doch vom betreffenden Material erreicht werden. Ausserdem besteht die Gefahr von Vibrationen der Riemen, die sich insbesondere dann, wenn die Fördereinrichtung bei hohen Geschwindigkeiten betrieben werden sollen, zu einer Laufunruhe führen, was sich in einer Ungenauigkeit der Messungen, beispielsweise beim dynamischen Verwiegen der Produkte bemerkbar macht.

Eine andere Lösung wird in der DE 10 2006 048 251 A1 vorgeschlagen, wobei die jeweiligen Fördergurte oder Förderbänder passgenau auf beiden Seiten in einer Führungswanne geführt werden. Somit soll das Einfallen von kleinem Fördergut, welches unter den Gurtlauf gelangen könnte, vermieden werden.

Aufgabe der Erfindung ist es, die durch aus zu transportierenden Gebinden rieselndes pulverförmiges oder feinkörniges Material verursachte Störungsanfälligkeit einer Fördereinrichtung, insbesondere einer Fördererbandeinrichtung nachhaltig zu verbessern, um somit Ausfallzeiten der Anlage zu verhindern.

Diese Aufgabe wird gelöst durch eine Förderbandeinrichtung mit einem Bandkörper, an welchem an den in Förderrichtung und entgegen der Förderrichtung sich befindenden Enden jeweils eine Förderrolle angeordnet ist und der in seiner Richtung senkrecht zur Förderrichtung durch Kanten begrenzt ist. Die Förderbandeinrichtung weist ein über den Bandkörper und die Förderrollen beweglich angeordnetes Förderband auf, welches beidseitig, das heisst in einer Richtung senkrecht zur Förderrichtung, durch Aussenkanten begrenzt ist. Dabei ist das Förderband derart angeordnet und über den Bandkörper und die Förderrollen gespannt, dass zwischen den Aussenkanten des Förderbandes und dem Bandkörpers eine Dichtwirkung erzielt wird.

Dies bedeutet, dass die Aussenkanten des Förderbandes und der Bandkörper dichtend zueinander angeordnet sind. Die Dichtwirkung wird über die gesamte Umlauflänge des Förderbandes über den Bandkörper erzielt, sowohl an der Unterseite als auch an der Oberseite des Bandkörpers.

Die Aussenkanten des Förderbandes sind dabei mindestens einen einem maximalen Schwankungshub einer lateralen Förderbandschwankung entsprechenden Abstand von den Kanten des Bandkörpers entfernt.

Unter dem Begriff Schwankungshub soll in diesem Zusammenhang die Ausdehnung einer lateralen Bewegung des Förderbandes in Richtung senkrecht zur Förderrichtung verstanden werden. Im Falle einer harmonischen Förderbandschwankung wäre hier die doppelte Amplitude als Schwankungshub zu betrachten.

Die Dichtwirkung wird insbesondere zwischen der dem Bandkörper zugewandten Seite an den Aussenkanten des Förderbandes und dem Bandkörper erzielt.

Das Förderband gleitet mit seinen lateralen Aussenkanten dichtend über den Bandkörper in dessen Randbereich und verhindert somit das Eindringen von pulverförmigem oder körnigem Material zwischen Bandkörper und Förderband, von wo es mitgenommen werden könnte und in die Lager der Fördebandeinrichtung gelangen könnte oder in den Antrieb und diese letztendlich beschädigen könnte.

Durch die gezielte Wahl des Abstandes der Aussenkanten des Förderbandes von den Kanten des Bandkörpers, wird erreicht, dass das Förderband in seinem Unterlauf niemals über den Bandkörper ragt und somit nicht als Aufnahme für vom Bandkörper herab fallendes Material dient.

Versuche mit der erfindungsgemässen Förderbandeinrichtung haben gezeigt, dass gegenüber einer Förderbandeinrichtung gemäss dem Stand der Technik eine enorme Verbesserung im Hinblick auf deren Ausfallsicherheit erzielt werden konnte. Bei der erfindungsgemässen Förderbandeinrichtung wurde auch während Langzeittests von mehreren Wochen beim Transport von Gebinden, die pulverförmiges oder körniges Material verlieren, kein Fördergut an der Unterseite des Förderbandes lokalisiert, was bedeutet, dass die drehenden Teile keiner Gefahr gegen Zerstörung ausgesetzt waren.

In einer bevorzugten Ausführungsform der Förderbandeinrichtung ist das Förderband elastisch. Dies hat zusätzlich den Vorteil, dass die notwendige Bandspannung bereits vorgegeben ist und nicht eingestellt zu werden braucht. Ausserdem kann das Förderband nachdem auf einer Seite der jeweilige Rollenkörper von der Halterung im Bereich des Rollenlagers getrennt wurde von der Förderbandanordnung zu Reinigungszwecken entfernt werden, indem das Förderband einfach abgezogen wird. In einer besonders vorteilhaften Ausgestaltung der Förderbandeinrichtung deckt im betriebsbereiten Zustand das Förderband sämtliche Verbindungen zwischen Förderrollen und deren Lager ab. Somit werden zusätzlich zum Vorteil, dass nahezu kein pulverförmiges oder körniges Material auf die Innenseite des Förderbandes, insbesondere wenn dises als Endlosband ausgeformt ist, gelangen kann, auch noch sämtliche drehenden Teile vor dem Eindringen unerwünschten Materials geschützt. Dadurch dass der Bandkörper frei von von aussen zugänglichen Öffnungen und Spalten ausgestaltet ist, bietet die Förderbandeinrichtung einen weiteren Schutz gegenüber dem Eindringen von pulverförmigem oder körnigem Material.

In bevorzugter Weiterbildung der Förderbandeinrichtung ist der Antrieb vermittels einer Abdeckung vollständig gekapselt. Insbesondere wenn die Abdeckung des Antriebs quer zur Förderrichtung bündig mit dem Bandkörper verlaufend ausgestaltet ist, sind vorstehende Teile auf ein Minimum reduziert.

Einem weiteren Erfindungsgedanken trägt die Ausgestaltung der Förderbandeinrichtung dadurch Rechnung, dass die an den in Förderrichtung und entgegen der Förderrichtung sich befindenden Enden angeordneten Förderrollen im Wesentlichen zylinderförmig sind mit einer leichten Ballung zur Zylindermitte hin. Dabei ist der Zylinderradius über die Zylinderlänge betrachtet in deren Mitte um wenige Zehntelmillimeter bis Millimeter grösser als an den jeweiligen Enden der Förderrollen. Diese leicht ballige Ausgestaltung der an sich zylinderförmigen Förderrollen trägt wesentlich zur Zentrierung des Förderbandes bei und stabilisiert es während des Betriebs der Förderbandeinrichtung

Die Erfindung wird anhand von Beispielen, wie sie stark schematisiert in den Zeichnungen dargestellt sind, im Folgenden beschrieben. Es zeigen:
- Fig. 1: eine perspektivische Ansicht einer erfindungsgemässen Förderbandeinrichtung,
- Fig. 2: eine Ansicht der erfindungsgemässen Förderbandeinrichtung von der Seite,
- Fig. 3: eine Ansicht der erfindungsgemässen Förderbandeinrichtung entgegen der Förderrichtung in betriebsbereitem Zustand mit installiertem Förderband, wobei der Ausschnittvergrösserung 3a der Abstand d der Aussenkante des Förderbandes von der Kante des Bandkörpers entnehmbar ist,
- Fig. 4: eine Schnittdarstellung der erfindungsgemässen Förderbandeinrichtung entgegen der Förderrichtung, worin die Lagerung der Antriebsrolle zu sehen ist,
- Fig. 5: eine Schnittdarstellung der erfindungsgemässen Förderbandeinrichtung in Förderrichtung, worin die Lagerung der Laufrolle zu sehen ist.

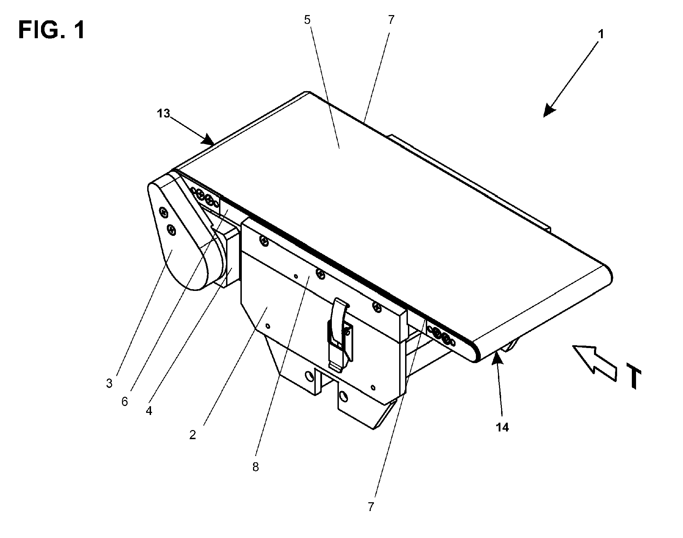

Die Figur 1 zeigt eine Förderbandeinrichtung 1, wie sie für den Transport von Waren geeignet ist, deren Verpackung ein Herausrieseln des im jeweiligen Gebinde enthaltenen pulverförmigen oder körnigen Materials nicht vollständig unterbinden können. Es handelt sich bei der in der Figur 1 gezeigten Förderbandeinrichtung um eine solche, die eine Wägezelle zum dynamischen Verwiegen der jeweiligen Gebinde enthält. Die Wägezelle ist unterhalb der Aufnahme 2 angeordnet, welche eine verschliessbare Klappe, die den Zugang zur Wägezelle ermöglicht, aufweist. Da die Wägezelle nicht Gegenstand der Erfindung ist, wird sie hier nicht weiter beschrieben. Anstelle einer Förderbandeinrichtung mit einer Wägezelle kann es sich bei einer solchen erfindungsgemässe Förderbandeinrichtung auch um eine Zufuhrbandeinrichtung, eine Abfuhrbandeinrichtung oder um eine Förderbandeinrichtung mit einer Vorrichtung zum Aussortieren von fehlerhaften Produkten oder um eine solche mit weiteren der Inspektion von Produkten dienenden Einrichtungen, beispielsweise einer Einrichtung zur Detektion von Verunreinigungen in den Produkten und dergleichen mehr handeln.

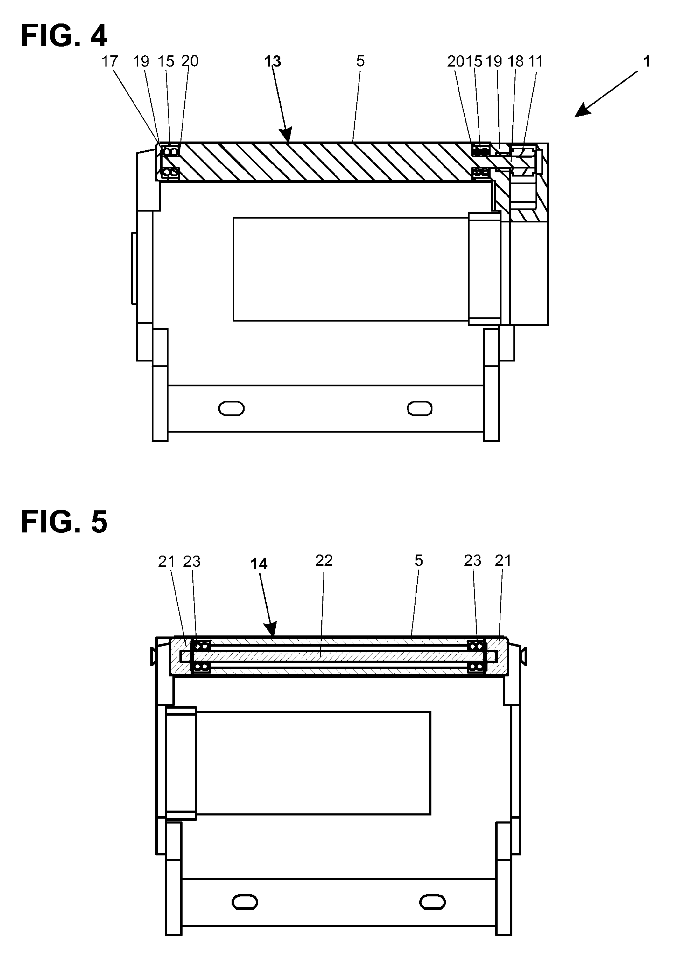

Die Förderbandeinrichtung 1 weist einen Antrieb auf, der vermittels einer Abdeckung 3 vollständig gekapselt ist und einerseits mit einem im Gehäuse 4 angeordneten Motor verbunden ist, und andererseits mit einer am Ende der Förderbandeinrichtung 1 sich befindenden Förderrolle, namentlich der Antriebsrolle 13. Die Antriebsrolle ist in der Figur 1 vom Förderband 5 vollständig abgedeckt, insbesondere auch in den Bereichen der Rollenlager beziehungsweise deren Verbindung mit dem Antrieb. Dies ist im Detail weiter unten anhand der Figur 4 näher erläutert.

Beim Förderband 5 handelt es sich um ein elastisches Band, das über den Bandkörper 6 und die Förderrollen als sogenanntes Endlosband gespannt ist. Für die hier gezeigte Anordnung ist keine Vorrichtung zur Einstellung der Bandspannung vorgesehen, sondern die Elastizität des Förderbandes 5 ist ausreichend, um selbiges auf die Förderbandeinrichtung 1 aufzubringen und von dieser wieder, beispielsweise zu Reinigungszwecken, abzunehmen.

Durch die Verwendung eines elastischen Förderbandes 5 ist die notwendige Bandspannung bereits vorgegeben. Ferner ist das Förderband 5 im betriebsbereiten Zustand selbstzentrierend, was ausserdem durch eine leicht ballige Form der jeweiligen Förderrollen, das heisst der Antriebsrolle 13 und der Laufrolle 14, unterstützt wird. Daher entfällt das aufwändige Einstellen der Förderbandspannung ebenso wie eine Schrägstellungskorrektur. Es sei jedoch darauf hingewiesen, dass eine Förderbandeinrichtung 1, die zusätzlich eine Vorrichtung zum Einstellen der Förderbandspannung und Schrägstellungskorrektur aufweist, ebenfalls vom Gedanken der Erfindung umfasst wird.

Das Förderband 5 ist nun derart auf dem Bandkörper 6 angeordnet und über den Bandkörper 6 sowie die Förderrollen, namentlich die Antriebsrolle 13 und die Laufrolle 14 gespannt, dass zwischen den Aussenkanten 7 des Förderbandes 5 und dem Bandkörper 6 eine Dichtwirkung erzielt wird. Dies bedeutet, dass das Förderband 5 im laufenden Betrieb über den Bandkörper 6 gleitet und mit seinen jeweiligen Aussenkanten 7, insbesondere der dem Bandkörper 6 zugewandten Seite an den Aussenkanten 7 des Förderbandes 5, stets den Bandkörper 6 berührt. Mithin wird verhindert, dass Pulver oder feinkörniges Material zwischen Bandkörper 6 und Förderband 5 gerät und eventuell zerrieben wird und/oder an der Innenseite des Förderbandes 5, das heisst der stets der zu transportierenden Ware abgewandten Förderbandseite bzw. -oberfläche, zu haften kommt und auf diese Weise weitertransportiert wird, somit gegebenenfalls in den Antrieb oder die Rollenlager gelangen könnte.

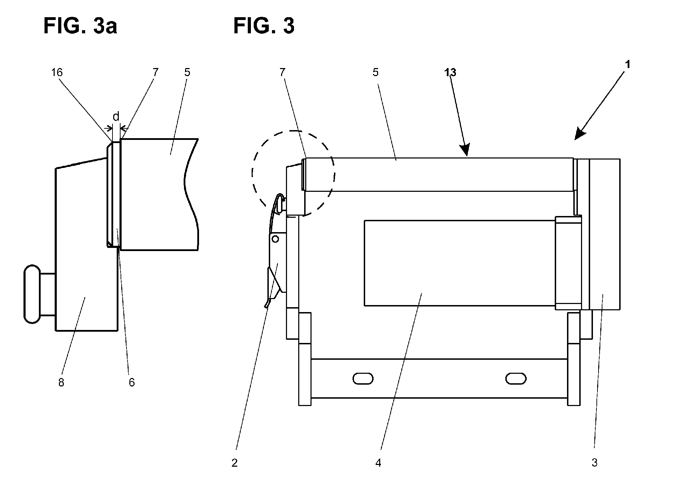

Im Betrieb einer Förderbandeinrichtung ist es unumgänglich, dass das Förderband geringfügigen, jedoch messbaren, lateralen Schwankungen - sogenannten Gurtschwankungen - unterworfen ist. Um zu verhindern, dass nun das Förderband 5, wenn auch nur kurzzeitig, in seinem Unterlauf, d.h. wenn es unterhalb des Bandkörpers 6 verläuft, mit einem geringfügigen Teil über den Rand des Bandkörpers 6 hinausragt und daher eventuell auf dem Bandkörper 6 befindliches Pulver oder körniges Material von diesem auf einen eventuell zeitweilig überstehenden unterhalb des Bandkörpers 6 befindlichen Teil des Förderbandes 5, das heisst die Innenseite des Förderbandes 5, fallen könnte, ist vorgesehen, die Aussenkante 7 um einen Abstand von der Kante 16 des Bandkörpers 6 entfernt zu halten. Dieser Abstand d entspricht mindestens einer doppelten Amplitude einer lateralen Schwankung des Förderbandes 5 und damit dem Schwankungshub (siehe auch Figur 3a).

Gurtschwankungen oder ein sogenannter Taumelschlag haben ihre Ursache in fertigungsbedingten Toleranzen bei der Herstellung des Transportbandes und betragen wenige Millimeter.

In der Figur 1 ist ausserdem erkennbar, dass weder der Bandkörper 6 noch weitere Teile der Förderbandeinrichtung 1 Spalte oder Öffnungen aufweisen, in welche Pulver oder körniges Material eindringen könnte.

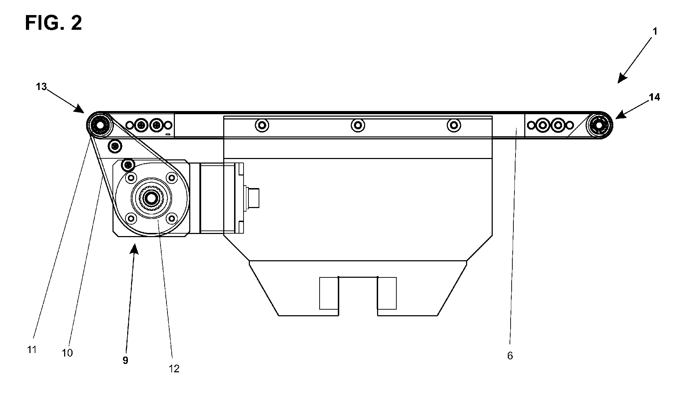

In der Figur 2 ist die Förderbandeinrichtung von der Seite zu sehen. Die Abdeckung 3 des Antriebs 9 ist abgenommen, so dass dieser erkennbar ist. Die Antriebsrolle 13 ist über einen Riemenantrieb mit zwei Antriebsrädern 11, 12 und einem Antriebsriemen 10 mit dem Motor verbunden. Dabei wird das Antriebsrad 11 häufig auch als getriebenes Rad bezeichnet. Der Motor ist unterhalb des Bandkörpers 6 platziert. Beim Riemenantrieb kann es sich um einen solchen mit Zahnriemen, Keilriemen und dergleichen mehr handeln. Gelangt Pulver oder körniges Material in den Antrieb 9 - hier zum Beispiel ein Zahnradantrieb - so setzt sich dieses bevorzugt in die Vertiefungen der Antriebsräder 11, 12 - hier Zahnräder - ab und verdichtet sich dort. Dies führt in den Vertiefungen zu einem Materialaufbau und dadurch zu einer Abstandsvergrösserung des Zahnriemens in Bezug auf die Zahnräder, was den Zahnriemen einer höheren Spannung und entsprechenden Dehnung aussetzt, und letztendlich zu dessen Reissen führt. Dies wird durch die erfindungsgemässe Förderbandeinrichtung 1 verhindert.

Am gegenüberliegenden Ende der Förderbandeinrichtung 1, das heisst an dem dem Antrieb 9 abgewandten Ende der Förderstrecke, ist die Laufrolle 14 in der Figur 2 zu sehen.

Die Figur 3 zeigt eine Ansicht der erfindungsgemässen Förderbandeinrichtung 1 entgegen der Förderrichtung T in betriebsbereitem Zustand mit installiertem Förderband 5. Neben dem Gehäuse 4 des Motors ist auf der rechten Seite der Darstellung die Abdeckung des Antriebs 3 erkennbar. Ferner ist links die Aufnahme 2 mit Klappe erkennbar, mittels welcher Bereiche unterhalb des Förderbandes 5 zugänglich sind, beispielsweise eine im Inneren der Förderbandeinrichtung 1 angeordnete Wägezelle (hier nicht sichtbar).

Wie der Figur 3a, die eine Ausschnittvergrösserung des eingekreisten Bereichs der Figur 3 darstellt, entnehmbar ist, ist die Aussenkante 7 des Förderbandes 5 einen gewissen Abstand d von der Kante 16 des Bandkörpers 6 entfernt, so dass in der Figur 3a noch ein Stück des Bandkörpers 6 sichtbar ist. Dieser Abstand d der Aussenkante 7 des Förderbandes 5 von der Kante 16 des Bandkörpers 6 ist so bemessen, dass laterale Schwankungen des Förderbandes 5 - sogenannte Gurtschwankungen - nicht dazu führen, dass das Förderband 5 über den Bandkörper 6 hinausragen könnte. Mit dieser Massnahme, namentlich, dass der Abstand d grösser oder gleich dem maximalen Schwankungshub einer Gurtschwankung bzw. lateralen Schwankung des Förderbandes gewählt ist, wird jegliches Überstehen des Förderbandes 5 über den Bandkörper 6 verhindert. Somit wird vermieden, dass pulverförmiges oder körniges Material vom Förderband 5 auf eventuell an der Unterseite des Bandkörpers 6 überstehende Bereiche des Förderbandes 5 auf dessen Innenseite fallen könnte. Gleichzeitig gleitet die Aussenkante 7 des Förderbandes 5, insbesondere deren dem Bandkörper 6 zugewandte Seite, über den Bandkörper 6 und bildet mit diesem zusammen eine Dichtung. Es kann also kein Material zwischen Bandkörper 6 und Förderband 5 eindringen.

Wie aus der Figur 3 ebenfalls erkennbar überdeckt das Förderband 5 die Antriebsrolle 13 vollständig, indem die Breite des Förderbandes 5 grösser gewählt ist, als die Länge der Antriebsrolle 13. Ferner sind jegliche weiteren drehbaren Teile der Förderbandeinrichtung 1 abgedeckt oder befinden sich in einem Gehäuse.

Die Figur 4 zeigt eine Schnittansicht der erfindungsgemässen Förderbandeinrichtung 1 entgegen Förderrichtung T, mit installiertem Förderband 5. Die Antriebsrolle 13 weist an ihren beiden Enden jeweils einen Zapfen 17, 18 auf. Die Zapfen 17, 18 sind vermittels der Antriebsrollenlager 15, die in einer Rollenaufnahme 19 im Bandkörper 6 aufgenommen sind, drehbar gelagert. Der Zapfen 18 ist gegenüber dem Zapfen 17 verlängert und mit dem Antriebsrad 11 fest im Eingriff. Im betriebsbereiten Zustand ist der Spalt 20, der zwangsläufig zwischen Antriebsrolle 13 und der Rollenaufnahme 19 vorhanden ist, durch das Förderband 5 abgedeckt.

Zum Reinigen kann das Förderband 5 abgenommen werden, wobei einseitig im Bereich des Antriebsrollenlagers 15 die Antriebsrolle 13 von der Rollenaufnahme 19 getrennt wird, wonach das elastische Förderband 5 einfach abgezogen werden kann.

Die Figur 5 zeigt eine Schnittansicht der erfindungsgemässen Förderbandeinrichtung 1 in Förderrichtung T, mit installiertem Förderband 5. Die Laufrolle 14 ist beidseitig in einem mit dem Bandkörper 5 verbundenen Rollenhalter 21 gelagert. Der Rollenhalter 21 nimmt die hier durch den gesamten Rollenkörper hindurchreichende Achse 22 auf, wobei die Laufrolle 14 um die Achse 22 vermittels der Laufrollenlager 23 drehbar gelagert ist. Auch hier gilt, dass die Breite des Förderbandes 5 ist grösser gewählt ist, als die Länge der Laufrolle 14.

Die Erfindung wurde anhand der in den Figuren dargestellten Ausführungsbeispiele gezeigt und beschrieben. Es versteht sich von selbst, dass weitere hier nicht beschriebene Ausführungsformen der Vorrichtung dem Wesen der Erfindung gerecht werden.

### Bezugszeichenliste

- 1: Förderbandeinrichtung
- 2: Aufnahme
- 3: Abdeckung des Antriebs
- 4: Gehäuse des Motors
- 5: Förderband
- 6: Bandkörper
- 7: Aussenkante des Förderbandes
- 8: Blende
- 9: Antrieb
- 10: Antriebsriemen
- 11: Antriebsrad
- 12: Antriebsrad
- 13: Antriebsrolle
- 14: Laufrolle
- 15: Antriebsrollenlager
- 16: Kante des Bandkörpers
- 17: Zapfen der Antriebsrolle
- 18: Zapfen der Antriebsrolle
- 19: Rollenaufnahme im Bandkörper
- 20: Spalt
- 21: Rollenhalter
- 22: Achse
- 23: Laufrollenlager
- d: Abstand Aussenkante des Förderbandes von der Kante des Bandkörpers
- T: Förderrichtung

## Patentansprüche

1. Förderbandeinrichtung (1) mit einem Bandkörper (6), an welchem an den in Förderrichtung (T) und entgegen der Förderrichtung (T) sich befindenden Enden jeweils eine Förderrolle (13, 14) angeordnet ist und der in seiner Richtung senkrecht zur Förderrichtung (T) durch Kanten (17) begrenzt ist, und mit einem über den Bandkörper (6) und die Förderrollen (13, 14) beweglich angeordneten Förderband (5), welches Förderband beidseitig durch Aussenkanten (7) begrenzt ist, **dadurch gekennzeichnet, dass** das Förderband (5) derart angeordnet und über den Bandkörper (6) und über die Förderrollen (13, 14) gespannt ist, dass zwischen den Aussenkanten (7) des Förderbandes (5) und dem Bandkörper (6) eine Dichtwirkung erzielt wird, wobei die Aussenkanten (7) des Förderbandes (5) mindestens einen einem maximalen Schwankungshub einer lateralen Förderbandschwankung entsprechenden Abstand (d) jeweils von den Kanten (17) des Bandkörpers (6) entfernt sind.

2. Förderbandeinrichtung nach Anspruch 1, **dadurch gekennzeichnet, dass** die Dichtwirkung zwischen der dem Bandkörper (6) zugewandten Seite an den Aussenkanten (7) des Förderbandes (5) und dem Bandkörper (6) erzielt wird.

3. Förderbandeinrichtung nach Anspruch 1 oder 2, **dadurch gekennzeichnet, dass** das Förderband (5) elastisch ist.

4. Förderbandeinrichtung nach Anspruch 1, 2 oder 3, **dadurch gekennzeichnet, dass** die Förderrollen (13, 14) mit dem Bandkörper (6) über Lager (15, 23), verbunden sind und im betriebsbereiten Zustand des Förderbandes (5) dieses in Bezug auf die Förderrollen (13, 14) sämtliche Verbindungen zwischen den Förderrollen (13, 14) und deren Lager (15, 23) abdeckend angeordnet ist.

5. Förderbandeinrichtung nach einem der Ansprüche 1 bis 4, **dadurch gekennzeichnet, dass** der Bandkörper (6) frei von von aussen zugänglichen Öffnungen und Spalten ausgestaltet ist

6. Förderbandeinrichtung nach einem der Ansprüche 1 bis 5, **dadurch gekennzeichnet, dass** diese einen Antrieb (9) aufweist und der Antrieb (9) vermittels einer Abdeckung (3) vollständig gekapselt ist.

7. Förderbandeinrichtung nach Anspruch 6, **dadurch gekennzeichnet, dass** die Abdeckung (3) des Antriebs (9) quer zur Förderrichtung (T) bündig mit dem Bandkörper (6) verlaufend ausgestaltet ist.

8. Förderbandeinrichtung nach einem der Ansprüche 1 bis 7, **dadurch gekennzeichnet, dass** die an den in Förderrichtung (T) und entgegen der Förderrichtung (T) sich befindenden Enden angeordneten Förderrollen (13, 14) im Wesentlichen zylinderförmig sind, die jeweils zur Zylindermitte hin leicht ballig ausgeformt sind.

9. Förderbandeinrichtung nach einem der Ansprüche 1 bis 8, **dadurch gekennzeichnet, dass** diese ein Zufuhrband und/oder ein Abfuhrband und/oder Einrichtung zum dynamischen Verwiegen von Produkten und/oder eine Einrichtung zur Inspektion von Produkten, insbesondere zur Detektion von Verunreinigungen in den jeweiligen Produkten umfasst.
